(19) 

**Europäisches Patentamt**
**European Patent Office**
**Office européen des brevets**

(11) **EP 4 227 181 B1**

(12) **EUROPEAN PATENT SPECIFICATION**

(45) Date of publication and mention
of the grant of the patent:
**12.03.2025 Bulletin 2025/11**

(21) Application number: **22784140.0**

(22) Date of filing: **08.04.2022**

(51) International Patent Classification (IPC):
***B60W 40/00*** *(2006.01)*     ***B60W 10/30*** *(2006.01)*
***B60W 10/119*** *(2012.01)*

(52) Cooperative Patent Classification (CPC):
**B60K 28/165; B60W 10/119; B60W 30/18172;**
B60W 2050/001; B60W 2300/18; B60W 2510/207;
B60W 2520/125; B60W 2520/14; B60W 2520/28;
B60W 2540/10; B60W 2540/18; B60W 2720/28;
B60W 2720/403

(86) International application number:
**PCT/CN2022/085796**

(87) International publication number:
**WO 2022/214074 (13.10.2022 Gazette 2022/41)**

(54) **ANTI-SKID CONTROL METHOD FOR TRANSFER CASE**

GLEITSCHUTZSTEUERUNGSVERFAHREN FÜR EIN TRANSFERGEHÄUSE

PROCÉDÉ DE COMMANDE ANTIPATINAGE POUR BOÎTE DE TRANSFERT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **08.04.2021 CN 202110378352**

(43) Date of publication of application:
**16.08.2023 Bulletin 2023/33**

(73) Proprietor: **China Faw Co., Ltd.**
**Changchun, Jilin 130011 (CN)**

(72) Inventors:
• **WANG, Deping**
**Changchun, Jilin 130011 (CN)**
• **CUI, Jinlong**
**Changchun, Jilin 130011 (CN)**
• **LIU, Yuanzhi**
**Changchun, Jilin 130011 (CN)**

• **ZHOU, Zehui**
**Changchun, Jilin 130011 (CN)**
• **WU, Aibin**
**Changchun, Jilin 130011 (CN)**
• **TU, Youyu**
**Changchun, Jilin 130011 (CN)**
• **ZHAO, Yang**
**Changchun, Jilin 130011 (CN)**
• **SUN, Qichun**
**Changchun, Jilin 130011 (CN)**

(74) Representative: **Penza, Giancarlo**
**Bugnion S.p.A.**
**Viale Lancetti, 17**
**20158 Milano (IT)**

(56) References cited:
**EP-A1- 2 022 659**     **CN-A- 1 883 978**
**CN-A- 105 377 661**     **CN-A- 106 553 541**
**CN-A- 113 060 119**     **US-A1- 2006 052 927**
**US-A1- 2009 127 014**     **US-A1- 2010 094 519**

## Description

### Cross-Reference to Related Application

The present invention claims the priority of Chinese Patent Application 202110378352.0, filed to the China Patent Office on April 08, 2021, and entitled "Anti-Skid Control Method for Transfer Case".

### Technical Field

The present invention relates to the technical field of anti-slip control, and in particular to an anti-skid control method for transfer case.

### Background

Under a track slip working condition, in response to the main driving wheel of a vehicle equipped with a timely four-wheel-drive transfer case generate track slip, anti-skid control needs to be implemented on the transfer case, that is, the engagement torque of the transfer case needs to be increased or decreased currently to achieve reasonable distribution of driving torques of a front axle and a rear axle of the vehicle again, thereby eliminating an over track slip state and an under track slip state of the main driving wheel to improve the traction performance and stability of the vehicle.

Currently, the anti-skid control for the four-wheel-drive transfer case is mainly based on threshold value control, that is, according to the magnitude of a speed difference between the front axle and the rear axle of the vehicle, an anti-skid control coefficient and a specific engagement torque value of the transfer case are determined; in response to the speed difference being greater than a preset threshold value, the engagement torque of the transfer case is quickly increased to achieve four-wheel-drive torque distribution; and in response to the speed difference being less than the preset threshold value, the engagement torque of the transfer case is decreased to achieve high-efficiency two-wheel-drive driving. However, in response to the vehicle running on a wet and slippery road surface in an acceleration mode, frequent and repeated engagement torque fluctuation, anti-slip fluctuation and longitudinal acceleration fluctuation of the transfer case are likely to occur, so that the judgment relationship between the speed difference and the threshold value is frequently and repeatedly changed, which is disadvantages to the driving performance and stability of the whole vehicle.

Document EP2022659 A1 discloses an anti-skid control method for a transfer case.

In summary, there is an urgent need to configure an anti-skid control method for transfer case to solve the above-mentioned problems.

### Summary

At least some embodiments of the present invention provides an anti-skid control method for transfer case, which is configured to adjust an engagement control torque of the transfer case in real time while avoiding the influence of anti-slip fluctuation and torque fluctuation of a vehicle to ensure the driving performance and stability of the whole vehicle.

The present invention utilizes the following technical solutions:

An embodiment of present invention provides an anti-skid control method for transfer case, including the following steps:

S10: calculating a target speed of a main driving shaft through the following formula: $v_{m, target} = \max(v_{s, target}, v_{min})$, wherein $v_{m, target}$ denotes the target speed of the main driving shaft, $v_{s, target}$ denotes the speed of the main driving shaft in response to the influence of the steering of a vehicle and the lateral deviation of a tire being considered, and $v_{min}$ denotes a minimum speed of the vehicle to avoid a wheel speed precision error and a jitter phenomenon of the vehicle under a starting low-speed driving condition;

S20: determining an anti-skid control condition through the following mode: in response to determining that $v_m > v_{m, target}(1+\lambda_1)$, and a time period t of keeping $v_m > v_{m, target}(1+\lambda_1)$ is greater than or equal to a time period $t_1$, starting an anti-skid control, and $t_1$ is related to the acceleration of the main driving shaft, $v_m$ denotes an average value of the rotating speeds of two wheels at two ends of the main driving shaft, and $\lambda_1$ denotes a trigger threshold offset of an anti-skid control function under a trackslip condition;

in an anti-skid control starting state, in response to determining that an engagement control torque $T_{target}$ of the transfer case of the vehicle is equal to 0, and the time period t of keeping $T_{target} = 0$ is greater than or equal to a time period $t_2$, exiting the anti-skid control, and $t_2$ is a calibration value; and

S30: calculating the engagement control torque $T_{target}$ of the transfer case through the following formula: $T_{target} = K_p \triangle_{v, m} + k_I \int \triangle_{v, m}$, and $k_p$ and $k_I$ denote a corrected proportional integral control parameters obtained by correcting a control parameter factor b of the vehicle in an over-trackslip state and an under-trackslip state, $\triangle_{v, m}$ denotes a speed control deviation of the main driving shaft, and $\triangle_{v, m} = v_m - v_{m, target}$.

An embodiment of present invention provides an electronic device, including:

> at least one processor; and
> a memory, configured to store at least one program; and
> in response to the at least one program is executed by the at least one processor, the at least one processor implements the anti-skid control method for transfer case as claimed in an embodiment of the present invention.

An embodiment of present invention further provides a computer-readable storage medium, wherein the computer-readable storage medium is configured to store a computer program, and in response to executed by a processor, the computer program implements the anti-skid control method for transfer case as claimed in an embodiment of the present invention.

**Brief Description of the Drawings**

> Fig. 1 is a first schematic flowchart of an anti-skid control method for transfer case according to an embodiment of the present invention;
> Fig. 2 is a second schematic flowchart of an anti-skid control method for transfer case according to an embodiment of the present invention;
> Fig. 3 is a schematic structural diagram of an electronic device according to an embodiment of the present invention.

**Detailed Description**

Throughout the specification, the same reference signs denote the same elements.

In the present embodiment, an anti-skid control method for transfer case is provided, in which the influence on the fluctuation of an engagement control torque of the transfer case of a vehicle under various conditions, such as acceleration, steering, lateral deviation and other conditions, are comprehensively considered, and multiple control parameters of the vehicle can be adjusted in real time, thereby realizing a stable anti-slip closed-loop control function of the vehicle, to avoid trackslip of the vehicle to ensure the driving performance and stability of the vehicle. In the present embodiment, the vehicle is a vehicle equipped with a timely four-wheel-drive transfer case.

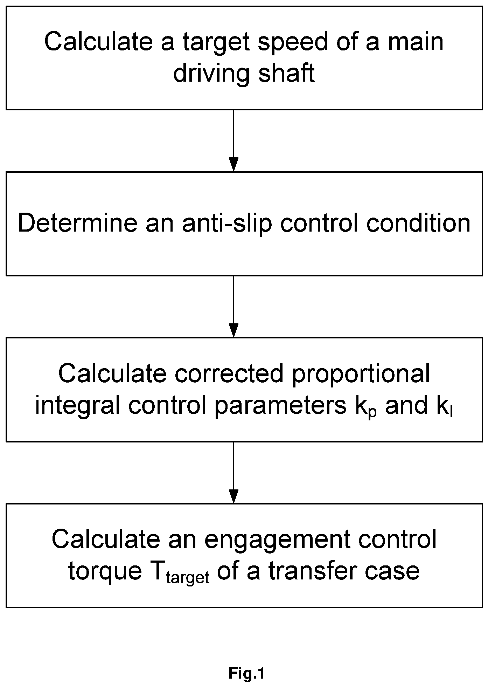

For example, as shown in Fig. 1, the anti-skid control method for transfer case includes the following steps:

In step S10: calculating a target speed of a main driving shaft: $v_{m, target} = \max(v_{s, target}, v_{min})$, and $v_{m, target}$ denotes the target speed of the main driving shaft, $v_{s, target}$ denotes the speed of the main driving shaft in response to the influence of the steering of a vehicle and the lateral deviation of a tire being considered, and $v_{min}$ denotes a minimum speed of the vehicle at different vehicle speeds to avoid a wheel speed precision error and a jitter phenomenon of the vehicle under a starting low-speed driving condition;

In step S20: determining an anti-skid control condition: in response to $v_m > v_{m, target}(1+\lambda_1)$, and a time period t of keeping $v_m > v_{m, target}(1+\lambda_1)$ is greater than or equal to a time period $t_1$, starting an anti-skid control, and $t_1$ is related to the acceleration of the main driving shaft, $v_m$ denotes an average value of the rotating speeds of two wheels at two ends of the main driving shaft, and $\lambda_1$ denotes a trigger threshold offset of an anti-skid control function under a trackslip condition; in an anti-skid control starting state, in response to an engagement control torque $T_{target}$ of the transfer case of the vehicle being equal to 0, and the time period t of keeping $T_{target} = 0$ is greater than or equal to a time period $t_2$, exiting the anti-skid control, and $t_2$ is a calibration value; and

In step S30: calculating the engagement control torque $T_{target}$ of the transfer case: $T_{target} = k_p \triangle_{v, m} + k_I \int \triangle_{v, m}$, and $k_p$ and $k_I$ both denote a corrected proportional integral control parameters obtained by correcting a control parameter factor b of the vehicle in an over-trackslip state and an under-trackslip state, $k_p$ and $k_I$ may be adaptively adjusted under a linear or steering working condition of the vehicle, $\triangle_{v, m}$ denotes a speed control deviation of the main driving shaft, and $\triangle_{v, m} = v_m - v_{m, target}$, therefore after the vehicle starts the anti-skid control function, the engagement control torque of the transfer case may be increased or decreased according to the value of $T_{target}$, which is calculated in real time according to $T_{target} = K_p \triangle_{v, m} + k_I \int \triangle_{v, m}$, so as to adjust the $T_{target}$ in real time, and accordingly, trackslip of the vehicle may be avoided.

By means of calculating the target speed of the main driving shaft: $v_{m, target} = \max(v_{s, target}, v_{min})$, in response to $v_m > v_{m, target}(1+\lambda_1)$, and the time t of keeping $v_m > v_{m, target}(1+\lambda_1)$ is greater than or equal to $t_1$, the anti-skid control is started; in the anti-skid control starting state, in response to the engagement control torque $T_{target}$ of the transfer case of the vehicle being equal to 0, and the time t of keeping $T_{target} = 0$ is greater than or equal to $t_2$, the anti-skid control is exited; and after the vehicle starts the anti-skid control, the engagement control torque for transfer case can be increased or decreased based on the value of $T_{target}$, which is calculated through $T_{target} = k_p \triangle_{v, m} + k_I \int \triangle_{v, m}$ to avoid trackslip of the vehicle. In this way, the driving torques of front and rear axles of the vehicle are reasonably distributed again to reduce the trackslip state of the main driving wheel and to ensure the traction performance and stability of the vehicle.

During the process of calculating the target speed $v_{m, target}$ of the main driving shaft, the influence of the steering of the vehicle and the lateral deviation of the tire is considered, and the wheel speed precision error and the jitter phenomenon of the vehicle under the starting low-speed driving working condition are avoided; and both the corrected proportional integral control parameters $k_p$ and $k_I$ involved in the calculation of the engagement control torque $T_{target}$ of the transfer case are obtained by correcting the control parameter factor of the vehicle in the over-trackslip state and the under-trackslip state, and $k_p$ and $k_I$ are configured to be adapatively adjusted under the linear or steering working condition of the vehicle, therefore anti-slip fluctuation and torque fluctuation of the vehicle under the trackslip working condition can be effectively avoided, thereby adjusting the engagement control torque $T_{target}$ of the transfer case in real time, and realizing an intelligent timely four-wheel-drive anti-slip closed-loop control function. In this way, in response to the vehicle runs on a wet and slippery road surface in an acceleration mode, frequent and repeated engagement torque fluctuation, anti-slip fluctuation and longitudinal acceleration fluctuation of the transfer case, which are disadvantages to the driving performance and stability of the whole vehicle, are avoided.

For example, in response to $\triangle_{v, m} > 0$, the main driving shaft being in the under-trackslip state, the engagement control torque $T_{target}$ of the transfer case is configured to increase currently, and the corrected proportional integral control parameters $k_p$ and $k_I$ are both positive values currently; and in response to $\triangle_{v, m} < 0$, the main driving shaft being in the over-trackslip state, the control parameter factor b is determined based on the specific driving condition of the vehicle currently to decrease the control parameter to reduce the engagement control torque $T_{target}$ of the transfer case and to reduce the descent speed of the engagement control torque $T_{target}$, thereby prolonging the anti-skid control time to avoid the problem of rotating speed fluctuation and acceleration fluctuation of the vehicle, which are caused by the fluctuation of the engagement control torque $T_{target}$.

For example, as shown in Fig. 1, the step S25 is further included between the step S20 and the step S30: calculating the corrected proportional integral control parameters $k_p$ and $k_I$:

$$k_p = \begin{cases} k_{p0}, & \Delta_{v,\ m} > 0 \\ bk_{p0}, & \Delta_{v,\ m} < 0 \end{cases}$$

$$k_I = \begin{cases} k_{I0}, & \Delta_{v,\ m} > 0 \\ bk_{I0}, & \Delta_{v,\ m} < 0 \end{cases}$$

and $k_{p0}$ and $k_{I0}$ denote proportional integral control parameters.

For example, in the step S25, in response to the vehicle is in a low-speed linear acceleration driving condition, since the response of the engagement control torque $T_{target}$ of the transfer case is relatively slow and the control precision is relatively low, in order to avoid the phenomena of torque fluctuation, rotating speed fluctuation and other conditions caused by frequent reciprocating of anti-skid control, the decrease of the engagement control torque $T_{target}$ in the anti-skid control of the transfer case can be slowed down by adjusting the control parameter factor b; and the control parameter factor $b = \begin{cases} 1, & a_{min} - a_k \geq a_{thrsh} \\ 0, & a_{min} - a_k < a_{thrsh} \end{cases}$; and $0 \leq b \leq 1$, $a_{min}$ denotes a minimum accelerator opening degree of the vehicle, $a_k$ denotes an accelerator opening degree at the current time, $a_{thrsh}$ denotes an accelerator opening degree change threshold value of the vehicle, and $a_{thrsh}$ is a calibration value.

For example, the minimum accelerator opening degree of the vehicle in the trackslip state is

$$a_{min} = \begin{cases} a_k, & TCS\ \text{intervene.} \\ max\left(a_{min,\ k-1},\ a_k\right), & TCS\ \text{exit} \end{cases}$$

wherein $a_{min, k-1}$ denotes the minimum accelerator opening degree of the vehicle at the previous time, and TCS denotes a traction control system of the vehicle.

For example, in the step S25, in response to the vehicle is a high-speed acceleration driving condition, the control parameter factor $b = max(b_\delta, b_v, b_{sw}, b_{coast})$; wherein $b_\delta$ denotes a steering wheel rotation angle control factor of the vehicle, and $0 \leq b_\delta \leq 1$, $b_v$ denotes a vehicle speed control parameter factor of the vehicle, and $0 \leq b_v \leq 1$, $b_{sw}$ denotes a control parameter factor of the vehicle under a steering condition, $b_{coast}$ denotes a slip control parameter factor of the vehicle, in response to the vehicle is in a slip driving condition and performing the anti-skid control, the slip control parameter factor $b_{coast}$ being equal to 1, and in response to the vehicle is in the slip driving condition and exits anti-skid control, the slip control parameter factor $b_{coast}$ being equal to 0.

Under a steering acceleration driving condition, the steering wheel rotation angle control factor $b_\delta$ of the vehicle increases with the increase of the absolute value of a steering wheel rotation angle, the absolute value of a lateral acceleration and the absolute value of a yaw rate, thereby avoiding a steering braking phenomenon caused by the excessively large engagement control torque of the transfer case under the steering working condition, that is, the calculation formula of the steering wheel rotation angle control factor $b_\delta$ of the vehicle is as follow:

$$b_\delta = \begin{cases} b_{\delta 1}, & \delta < \delta_1 \\ b_{\delta 1} + \dfrac{b_{\delta 2} - b_{\delta 1}}{\delta_2 - \delta_1}(\delta - \delta_1), & \delta_1 < \delta < \delta_2 \\ b_{\delta 2}, & \delta > \delta_2 \end{cases}$$

and $\delta$ denotes a steering wheel rotation angle of the vehicle, and the unit of the steering wheel rotation angle is rad; both $\delta_1$ and $\delta_2$ denote calibration values of the steering wheel rotation angle of the vehicle, and $\delta_1$ and $\delta_2$ are determined values, and the unit of the calibration value is rad; and both $b_{\delta 1}$ and $b_{\delta 2}$ denote calibration values of a steering wheel rotation angle control parameter of the vehicle, and $b_{\delta 1}$ and $b_{\delta 2}$ are determined values.

For example, under a high-speed acceleration driving condition, the vehicle speed control parameter factor $b_v$ decreases with the increase of the vehicle speed, thereby avoiding excessive intervention in the anti-skid control under the high-speed acceleration driving condition, that is, the calculation formula of the vehicle speed control parameter factor $b_v$ of the vehicle is as follow:

$$b_v = \begin{cases} b_{v1}, & v < v_1 \\ b_{v1} + \dfrac{b_{v2} - b_{v1}}{v_2 - v_1}(v - v_1), & v_1 < v < v_2 \\ b_{v2}, & v > v_2 \end{cases}$$

and v denotes a vehicle speed of the vehicle, and the unit of the vehicle speed is m/s; both $v_1$ and $v_2$ denote speed calibration values of the vehicle, $v_1$ and $v_2$ are determined values, and the unit of the speed calibration value is m/s; and both $b_{v1}$ and $b_{v2}$ denote calibration values of a vehicle speed control parameter of the vehicle, and $b_{v1}$ and $b_{v2}$ are determined values.

The calculation formula of the control parameter factor $b_{sw}$ of the vehicle under the steering working condition is as follow:

$$b_{sw} = max\big(b_\delta, \ b_{ay}, \ b_y\big)b_T$$

and $b_{ay}$ denotes a lateral acceleration control parameter factor, $b_y$ denotes a yaw rate control parameter factor, and $b_T$ denotes a torque control parameter factor under a steering acceleration condition.

For example, the calculation formula of the lateral acceleration control parameter factor $b_{ay}$ is as follow:

$$b_{ay} = \begin{cases} b_{ay1}, & ay < ay_1 \\ b_{ay1} + \dfrac{b_{ay2} - b_{ay1}}{ay_2 - ay_1}(ay - ay_1), & ay_1 < ay < ay_2 \\ b_{ay2}, & ay > ay_2 \end{cases}$$

and ay denotes a lateral acceleration of the vehicle, and the unit is of the lateral acceleration is m/s$^2$; both $ay_1$ and $ay_2$ denote lateral acceleration calibration values of the vehicle, $ay_1$ and $ay_2$ are determined values, and the unit is of the lateral acceleration calibration value is m/s$^2$; and both $b_{ay1}$ and $b_{ay2}$ denote calibration values of a lateral acceleration control parameter of the vehicle, and $b_{ay1}$ and $b_{ay2}$ are determined values.

For example, the calculation formula of the yaw rate control parameter factor $b_y$ is as follow:

$$b_y = \begin{cases} b_{y1}, & y < y_1 \\ b_{y1} + \dfrac{b_{y2} - b_{y1}}{y_2 - y_1}(y - y_1), & y_1 < y < y_2 \\ b_{y2}, & y > y_2 \end{cases}$$

and y denotes a yaw rate of the vehicle, and the unit of the yaw rate is rad/s; both $y_1$ and $y_2$ denote yaw rate calibration values of the vehicle, $y_1$ and $y_2$ are determined values, and the unit of the yaw rate calibration value is rad/s; and both $b_{y1}$ and $b_{y2}$ denote calibration values of a yaw rate control parameter of the vehicle, and $b_{y1}$ and $b_{y2}$ are determined values.

For example, since the torque control parameter factor $b_T$ under the steering acceleration condition increases along with the increase of the driving torque of the driving shaft, that is, the calculation formula of $b_T$ is as follow:

$$b_T = \begin{cases} b_{T1}, & T < T_1 \\ b_{T1} + \dfrac{b_{T2} - b_{T1}}{T_2 - T_1}(T - T_1), & T_1 < T < T_2 \\ b_{T2}, & T > T_2 \end{cases}$$

and T denotes a driving torque of the vehicle, and the unit of the driving torque is N·m; both $T_1$ and $T_2$ denote driving torque calibration values of the vehicle, $T_1$ and $T_2$ are determined values, and the unit of the driving torque calibration value is N·m; and both $b_{T1}$ and $b_{T2}$ denote calibration values of a driving torque control parameter of the vehicle, and $b_{T1}$ and $b_{T2}$ are determined values.

For example, in response to the main driving shaft is a rear axle, the influence of the steering of the vehicle and the lateral deviation of the tire being considered at the same time:

$$v_{s,\ target} = max\left(\frac{v_{m,F} - \gamma L \sin\theta}{\cos\theta}(1 + \lambda_0),\ v_{m,F}\right)$$

wherein, $\lambda_0$ denotes a target trackslip rate; $\theta$ denotes a front wheel rotation angle of the vehicle, and the unit of the front wheel rotation angle is rad; $\gamma$ denotes the yaw rate of the vehicle, and the unit of the yaw rate is rad/s; $v_{m,F}$ denotes an average value of the rotating speeds of the two wheels at the two ends of the front axle, that is, the average value of the rotating speeds of a left front wheel and a right front wheel, and the unit of the average value of the rotating speed is m/s; and L denotes a wheelbase, and the unit of the wheelbase is m; and
in response to the main driving shaft is a front axle, the influence of the steering of the vehicle and the lateral deviation of the tire being considered at the same time:

$$v_{s,\ target} = max\left((v_{m,R}\cos\theta + \gamma L \sin\theta)(1 + \lambda_0),\ v_{m,R}\right)$$

and $v_{m,R}$ denotes an average value of the rotating speeds of the two wheels at the two ends of the rear axle, that is, the average value of the rotating speeds of a left rear wheel and a right rear wheel, and the unit of the average value of the rotating speed is m/s.

For example, in order to avoid the wheel speed precision error and the jitter phenomenon of the vehicle under the low-speed driving condition such as starting, the calculation formula of the minimum speed $v_{min}$ of the vehicle at different vehicle speeds is as follow:

$$v_{min} = MAP(v_{x0},\ v_{y0,min})$$

and both $v_{x0}$ and $v_{y0,\ min}$ are calibration values, $v_{x0}$ = [0 1 25 10 20 100], $v_{y0,\ min}$ = [ 21.5 1.2 10.5 0.2 0.2].

For example, in order to enable the vehicle to quickly start the anti-skid control under a severe trackslip condition, it is judged that the time $t_1$ is related to the acceleration of the main driving shaft, and the calculation formula of the time $t_1$ is as follow:

$$t_1 = \begin{cases} t_{11}, & a_{axle} < a_{11} \\ t_{11} + \dfrac{t_{12} - t_{11}}{a_{12} - a_{11}}(a_{axle} - a_{11}), & a_{11} < a_{axle} < a_{12} \\ t_{12}, & a_{axle} > a_{12} \end{cases}$$

and $a_{axle}$ denotes an actual acceleration of the main driving shaft, and the unit of the actual acceleration is m/s$^2$; both $a_{11}$ and $a_{12}$ denote acceleration calibration values of the main driving shaft, and the unit of the acceleration calibration value is m/s$^2$, and $t_{11}$ and $t_{12}$ denote time calibration values, and the unit of the time calibration value is s.

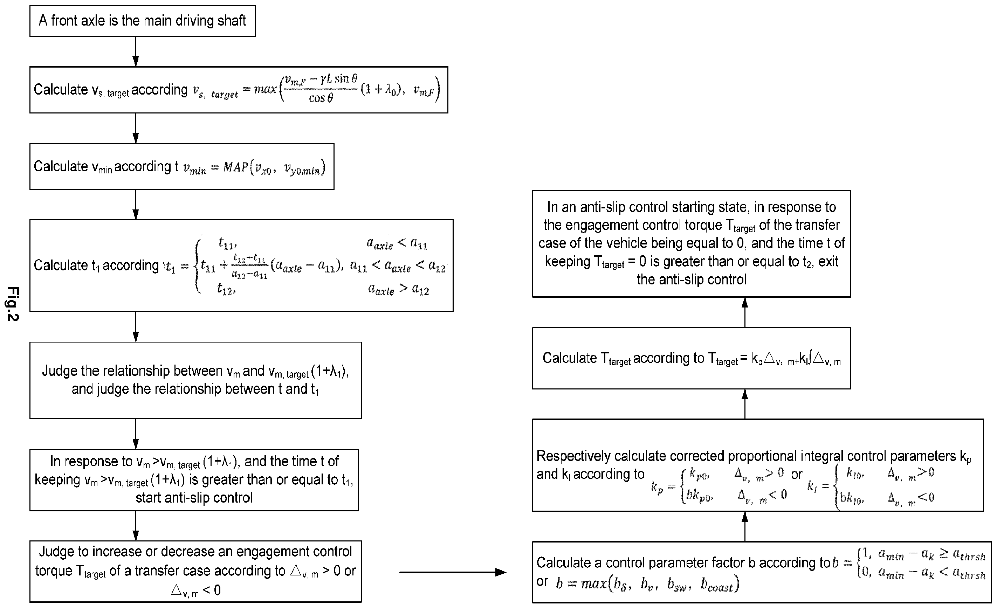

The control process of the anti-skid control method for transfer case in the present embodiment is as follows: as shown in Fig. 2, the front axle is taken as the main driving shaft: first, $v_{s,\,target}$ is calculated through $v_{s,\,target} = max((v_{m,R}\cos\theta + \gamma L\sin\theta)(1 + \gamma_0), v_{m,R})$, and $v_{m,\,R}$ denotes the speed of the rear axle, that is, the average value of the rotating speeds of the two wheels at the two ends of the rear axle; and $v_{min}$ is calculated through , and then the target speed $v_{m,\,target}$ of the front axle is calculated through $v_{m,\,target} = max(v_{s,\,target}, v_{min})$. $v_{min} = MAP(v_{x0}, v_{y0,min})$

Then, $t_1$ is calculated through

$$t_1 = \begin{cases} t_{11}, & a_{axle} < a_{11} \\ t_{11} + \dfrac{t_{12} - t_{11}}{a_{12} - a_{11}}(a_{axle} - a_{11}), & a_{11} < a_{axle} < a_{12} \\ t_{12}, & a_{axle} > a_{12} \end{cases}$$

and through $v_m > v_{m,\,target}(1 + \lambda_1)$, and the time t of keeping $v_m > v_{m,\,target}(1 + \lambda_1)$ is greater than or equal to a time $t_1$, it is judged that the vehicle needs to perform anti-skid control, that is, anti-skid control is started currently, wherein $v_m$ denotes the speed of the front axle, that is, the average value of the rotating speeds of the two wheels at the two ends of the front axle.

Next, it is judged through $\triangle_{v,\,m} > 0$ or $\triangle_{v,\,m} < 0$ that, the vehicle needs to increase the engagement control torque $T_{target}$ of the transfer case or decrease the engagement control torque $T_{target}$ of the transfer case.

Afterwards, the control parameter factor b is calculated through the working condition of the vehicle: in response to the vehicle is in the low-speed linear acceleration driving condition, the control parameter factor b being calculated through

$$b = \begin{cases} 1, & a_{min} - a_k \geq a_{thrsh} \\ 0, & a_{min} - a_k < a_{thrsh} \end{cases}$$

; or, in response to the vehicle is in the high-speed acceleration driving condition, the control parameter factor b being calculated through

$$b = max(b_\delta, \, b_v, \, b_{sw}, \, b_{coast})$$

Then, the corrected proportional integral control parameters $k_p$ and $k_I$ are respectively calculated through

$$k_p = \begin{cases} k_{p0}, & \Delta_{v,\,m} > 0 \\ bk_{p0}, & \Delta_{v,\,m} < 0 \end{cases} \qquad k_I = \begin{cases} k_{I0}, & \Delta_{v,\,m} > 0 \\ bk_{I0}, & \Delta_{v,\,m} < 0 \end{cases}$$

and ; and a specific numerical value of the engagement control torque $T_{target}$ of the transfer case, which needs to be adjusted in real time under different working conditions, is calculated through $T_{target} = k_p\Delta_{v,m} + k_I \int \Delta_{v,m}$, and the engagement control torque $T_{target}$ of the transfer case is correspondingly increased or decreased.

Finally, in the anti-skid control starting state, in response to the engagement control torque $T_{target}$ of the transfer case of the vehicle is equal to 0, and the time t of keeping $T_{target} = 0$ being greater than or equal to $t_2$, the anti-skid control is exited to complete the anti-skid control process of the whole vehicle.

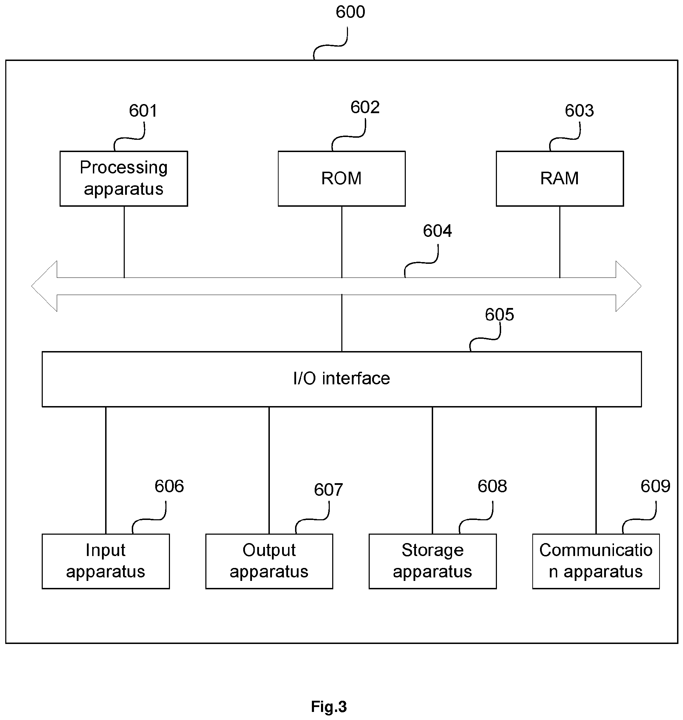

Referring to Fig. 3, it shows a schematic structural diagram of an electronic device (e.g., a terminal device or a server in Fig. 3) 600 suitable for implementing the embodiments of the present invention. The terminal device in the embodiments of the present invention include, but is not limited to, mobile terminals such as a mobile phone, a notebook computer, a digital broadcast receiver, a PDA (Personal Digital Assistant), a PAD (Tablet computer), a PMP (Portable Multimedia Player), an on-board terminal (e.g., an on-board navigation terminal), and other mobile terminals, and fixed terminals such as a digital TV, a desktop computer, and other fixed terminals. The electronic device shown in Fig. 3 is an example, and should not bring any limitation to the functions and use ranges of the embodiments of the present invention.

As shown in Fig. 3, the electronic device 600 include a processing apparatus (e.g., a central processor, a graphics processor, and other processing apparatus) 601, which execute multiple appropriate actions and processing based on programs stored in a read only memory (ROM) 602 or programs loaded into a random access memory (RAM) 603 from a storage apparatus 608. In the RAM 603, various programs and data required for the operations of the electronic device 600 are also stored. The processing apparatus 601, the ROM 602 and the RAM 603 are connected with each other through a bus 604. An input/output (I/O) interface 605 is also connected to the bus 604.

Generally, the following apparatuses are configured to be connected to the I/O interface 605: an input apparatus 606, including, for example, a touch screen, a touchpad, a keyboard, a mouse, a camera, a microphone, an accelerometer, a gyroscope and other input apparatuses; an output apparatus 607, including, for example, a liquid crystal display (LCD), a loudspeaker, a vibrator, and the like; the storage apparatus 608, including, for example, a magnetic tape, a hard disk, and the like; and a communication apparatus 609. The communication apparatus 609 allow the electronic device 600 to perform wired or wireless communication with other devices to exchange data. Although Fig. 3 shows the electronic device 600 is configured with multiple apparatuses, it should be understood that, it is not required to implement or have all illustrated apparatuses. More or fewer apparatuses are configured to be alternatively implemented or provided.

For example, according to the embodiments of the present invention, the process mentioned above with reference to the flowchart can be implemented as a computer software program. For example, the embodiments of the present invention include a computer program product, which includes a computer program carried on a non-transient computer-readable medium, and the computer program includes a program code, which is configured to execute the method shown in the flowchart.

The computer-readable medium can be contained in the electronic device; and the computer-readable medium can also exist alone, and is not assembled in the electronic device.

The computer-readable medium carries at least one program, and in response to being executed, the at least one program execute the following steps:

S10: calculating a target speed of a main driving shaft through the following formula: $v_{m,\ target} = \max(v_{s,\ target}, v_{min})$, and $v_{m,\ target}$ denotes the target speed of the main driving shaft, $v_{s,\ target}$ denotes the speed of the main driving shaft in response to the influence of the steering of a vehicle and the lateral deviation of a tire being considered, and $v_{min}$ denotes a minimum speed of the vehicle to avoid a wheel speed precision error and a jitter phenomenon of the vehicle under a starting low-speed driving condition;

S20: determining an anti-skid control condition through the following mode: in response to determining that $v_m > v_{m,\ target}(1+\lambda_1)$, and a time period t of keeping $v_m > v_{m,\ target}(1+\lambda_1)$ is greater than or equal to a time period $t_1$, starting anti-skid control, and the time period $t_1$ is related to the acceleration of the main driving shaft, $v_m$ denotes an average value of the rotating speeds of two wheels at two ends of the main driving shaft, and $\lambda_1$ denotes a trigger threshold offset of an anti-skid control function under a trackslip condition;

in an anti-skid control starting state, in response to determining that an engagement control torque $T_{target}$ of the transfer case of the vehicle is equal to 0, and the time period t of keeping $T_{target} = 0$ being greater than or equal to a time period $t_2$, exiting the anti-skid control, and $t_2$ is a calibration value;

S30: calculating the engagement control torque $T_{target}$ of the transfer case through the following formula: $T_{target} = k_p\triangle_{v,\ m} + k_l \int \triangle_{v,\ m}$, and $k_p$ and $k_l$ denote corrected proportional integral control parameters obtained by correcting a control parameter factor b of the vehicle in an over-trackslip state and an under-trackslip state, $\triangle_{v,\ m}$ denotes a speed control deviation of the main driving shaft, and $\triangle_{v,\ m} = v_m - v_{m,\ target}$.

It should be noted that, the computer-readable storage medium in the present invention is configured to be a computer-readable signal medium or a computer-readable storage medium or a combination thereof. The computer-readable storage medium can be, for example, but is not limited to, electrical, magnetic, optical, electromagnetic, infrared, or semiconductor systems, apparatuses or devices, or a combination of any of the above systems, apparatuses or devices. More specific examples of the computer-readable storage medium include, but are not limited to: an electrical connection with at least one wires, a portable computer disk, a hard disk, a random access memory (RAM), a read only memory (ROM), an erasable programmable read only memory (EPROM or a flash memory), an optical fiber, a portable compact disc read only memory (CD-ROM), an optical storage device, a magnetic storage device, or any suitable combination of the above devices. In the present invention, the computer-readable storage medium can be any tangible medium that contains or stores a program, and the program can be used by or combined with an instruction execution system, apparatus or device for use. In the present invention, the computer-readable signal medium include a data signal, which is propagated in a baseband or as part of a carrier, and a computer-readable program code is carried in the data signal. Such a propagated data signal take multiple forms, including, but not limited to, an electromagnetic signal, an optical signal, or any suitable combination thereof. The computer-readable signal medium may also be any computer-readable medium other than the computer-readable storage medium, and the computer-readable signal medium send, propagate or transmit the program, which is taken by or combined with the instruction execution system, apparatus or device for use. The program code contained on the computer-readable medium may be transmitted by any suitable medium, including but not limited to: an electric wire, an optical cable, RF (radio frequency), and other suitable mediums, or any suitable combination of the foregoing manners.

**Claims**

1. An anti-slip control method of transfer case, **characterized in that** it comprises:

    S10: calculating a target speed of a main driving shaft through the following formula: $v_{m, target} = max(v_{s, target}, v_{min})$, wherein $v_{m, target}$ denotes the target speed of the main driving shaft, $v_{s, target}$ denotes the speed of the main driving shaft in response to the influence of the steering of a vehicle and the lateral deviation of a tire being considered, and $v_{min}$ denotes a minimum speed of the vehicle to avoid a wheel speed precision error and a jitter phenomenon of the vehicle under a starting low-speed driving condition;

    S20: determining an anti-slip control condition through the following mode: in response to determining that $v_m > v_{m, target} (1+\lambda_1)$, and a time period t of keeping $v_m > v_{m, target} (1+\lambda_1)$ is greater than or equal to a time period $t_1$, starting an anti-slip control, and $t_1$ is related to the acceleration of the main driving shaft, $v_m$ denotes an average value of the rotating speeds of two wheels at two ends of the main driving shaft, and $\lambda_1$ denotes a trigger threshold offset of an anti-slip control function under a trackslip condition;

    in an anti-slip control starting state, in response to determining that an engagement control torque $T_{target}$ of the transfer case of the vehicle is equal to 0, and the time period t of keeping $T_{target} = 0$ is greater than or equal to a time period $t_2$, exiting the anti-slip control, and $t_2$ is a calibration value;

    S30: calculating the engagement control torque $T_{target}$ of the transfer case through the following formula: $T_{target} = K_p \triangle_{v, m} + k_I \int \triangle_{v, m}$, and $k_p$ and $k_I$ denote a corrected proportional integral control parameters obtained by correcting a control parameter factor b of the vehicle in an over-trackslip state and an under-trackslip state, $\triangle_{v, m}$ denotes a speed control deviation of the main driving shaft, and $\triangle_{v, m} = v_m - v_{m, target}$.

2. The method as claimed in claim 1, wherein in response to determining that $\triangle_{v, m} > 0$, that the main driving shaft is determined to be in the under-trackslip state, and the engagement control torque $T_{target}$ of the transfer case is increased; and in response to determining that $\triangle_{v, m} < 0$, that the main driving shaft is determined to be in the over-trackslip state, and the engagement control torque $T_{target}$ of the transfer case is decreased, and the descent speed of $T_{target}$ is reduced.

3. The method as claimed in claim 1, wherein a step S25 is further contained between the step S20 and the step S30: calculating the corrected proportional integral control parameters $k_p$ and $k_I$ through the following formulas:

$$k_p = \begin{cases} k_{p0}, & \triangle_{v, m} > 0 \\ bk_{p0}, & \triangle_{v, m} < 0 \end{cases}$$

$$k_I = \begin{cases} k_{I0}, & \triangle_{v, m} > 0 \\ bk_{I0}, & \triangle_{v, m} < 0 \end{cases}$$

    and $k_{p0}$ and $k_{I0}$ denote a proportional integral control parameters, and b denotes the control parameter factor.

4. The method as claimed in claim 3, wherein in the step S25, in response to determining that the vehicle is in a low-speed linear acceleration driving condition, the control parameter factor b is calculated through the following formula:

    the control parameter factor $b = \begin{cases} 1, & a_{min} - a_k \geq a_{thrsh} \\ 0, & a_{min} - a_k < a_{thrsh} \end{cases}$ ;

    and $0 \leq b \leq 1$, $a_{min}$ denotes a minimum accelerator opening degree of the vehicle, $a_k$ denotes an accelerator opening degree at the current time, $a_{thrsh}$ denotes an accelerator opening degree change threshold value of the vehicle, and $a_{thrsh}$ is a calibration value.

5. The method as claimed in claim 3, wherein in the step S25, in response to determining that the vehicle is in a high-speed acceleration driving condition, the control parameter factor b is calculated through the following formula:

the control parameter factor $b = max\ (b_\delta,\ b_v,\ b_{sw},\ b_{coast})$;
and $b_\delta$ denotes a steering wheel rotation angle control factor of the vehicle, $0 \le b_\delta \le 1$, $b_v$ denotes a vehicle speed control parameter factor of the vehicle, $0 \le b_v \le 1$, $b_{sw}$ denotes a control parameter factor of the vehicle under a steering condition, $b_{coast}$ denotes a slip control parameter factor of the vehicle, in response to determining that the vehicle is in a slip driving condition and performing anti-slip control, the slip control parameter factor $b_{coast}$ is equal to 1, and in response to determining that the vehicle is in the slip driving condition and exiting anti-slip control, the slip control parameter factor $b_{coast}$ is equal to 0.

6. The method as claimed in claim 5, wherein the calculation formula of the steering wheel rotation angle control factor $b_\delta$ of the vehicle is as follow:

$$b_\delta = \begin{cases} b_{\delta 1}, & \delta < \delta_1 \\ b_{\delta 1} + \dfrac{b_{\delta 2} - b_{\delta 1}}{\delta_2 - \delta_1}(\delta - \delta_1), & \delta_1 < \delta < \delta_2 \\ b_{\delta 2}, & \delta > \delta_2 \end{cases}$$

and $\delta$ denotes a steering wheel rotation angle of the vehicle, and the unit of the steering wheel rotation angle is rad; both $\delta_1$ and $\delta_2$ denote calibration values of the steering wheel rotation angle of the vehicle, and $\delta_1$ and $\delta_2$ are determined values, and the unit of the steering wheel rotation angle is rad; and both $b_{\delta 1}$ and $b_{\delta 2}$ denote calibration values of a steering wheel rotation angle control parameter of the vehicle, and $b_{\delta 1}$ and $b_{\delta 2}$ are determined values.

7. The method as claimed in claim 5, wherein the calculation formula of the vehicle speed control parameter factor $b_v$ of the vehicle is as follow:

$$b_v = \begin{cases} b_{v1}, & v < v_1 \\ b_{v1} + \dfrac{b_{v2} - b_{v1}}{v_2 - v_1}(v - v_1), & v_1 < v < v_2 \\ b_{v2}, & v > v_2 \end{cases}$$

and v denotes a vehicle speed of the vehicle, and the unit of the vehicle speed is m/s; both $v_1$ and $v_2$ denote speed calibration values of the vehicle, and $v_1$ and $v_2$ are determined values, and the unit of the speed calibration value is m/s; and both $b_{v1}$ and $b_{v2}$ denote calibration values of a vehicle speed control parameter of the vehicle, and $b_{v1}$ and $b_{v2}$ are determined values.

8. The method as claimed in claim 5, wherein the calculation formula of the control parameter factor $b_{sw}$ of the vehicle under the steering condition is as follow:

$$b_{sw} = max\left(b_\delta,\ b_{ay},\ b_y\right)b_T$$

and $b_{ay}$ denotes a lateral acceleration control parameter factor, $b_y$ denotes a yaw rate control parameter factor, and $b_T$ denotes a torque control parameter factor under a steering acceleration condition.

9. The method as claimed in claim 1, wherein in response to determining that the main driving shaft is a rear axle, and the influence of the steering of the vehicle and the lateral deviation of the tire being considered, the speed $v_{s,\ target}$ of the main driving shaft is calculated through the following formula:

$$v_{s,\ target} = max\left(\frac{v_{m,F} - \gamma L \sin\theta}{\cos\theta}(1 + \lambda_0),\ v_{m,F}\right)$$

and $v_{m, F}$ denotes an average value of the rotating speeds of the two wheels at the two ends of the front axle, and the unit of the rotating speed is m/s; $\lambda_0$ denotes a target trackslip rate; $\theta$ denotes a front wheel rotation angle, and the unit of the front wheel rotation angle is rad; $\gamma$ denotes the yaw rate of the vehicle, and the unit of the yaw rate is rad/s; and $L$ denotes a wheelbase, and the unit of the wheelbase is m;

in response to determining that the main driving shaft is a front axle, and the influence of the steering of the vehicle and the lateral deviation of the tire being considered, the speed $v_{s, target}$ of the main driving shaft is calculated through the following formula:

$$v_{s, \ target} = max\left(\left(v_{m,R}\cos\theta + \gamma L \sin\theta\right)(1 + \lambda_0), \ v_{m,R}\right)$$

and $v_{m, R}$ denotes an average value of the rotating speeds of the two wheels at the two ends of the rear axle, and the unit of the rotating speeds is m/s.

10. The method as claimed in claim 1, wherein the calculation formula of the minimum speed $v_{min}$ of the vehicle is as follow:

$$v_{min} = MAP\left(v_{x0}, \ v_{y0,min}\right)$$

and both $v_{x0}$ and $v_{y0, min}$ are calibration values, $v_{x0}$ = [0 1 25 10 20 100], $v_{y0, min}$ = [ 21.5 1.2 10.5 0.2 0.2].

11. An electronic device, comprising:

at least one processor; and
a memory, configured to store at least one program; and
in response to the at least one program is executed by the at least one processor, the at least one processor implements the anti-slip control method of transfer case as claimed in any one of claims 1-10.

12. A computer-readable storage medium, wherein the computer-readable storage medium is configured to store a computer program, and in response to executed by a processor, the computer program implements the anti-slip control method of transfer case as claimed in any one of claims 1-10.

13. The method as claimed in claim 8, wherein the calculation formula of the lateral acceleration control parameter factor bay is as follow:

$$b_{ay} = \begin{cases} b_{ay1}, & ay < ay_1 \\ b_{ay1} + \dfrac{b_{ay2} - b_{ay1}}{ay_2 - ay_1}(ay - ay_1), & ay_1 < ay < ay_2 \\ b_{ay2}, & ay > ay_2 \end{cases}$$

and ay denotes a lateral acceleration of the vehicle, and the unit is of the lateral acceleration is m/s$^2$;both $ay_1$ and $ay_2$ denote lateral acceleration calibration values of the vehicle, $ay_1$ and $ay_2$ are determined values, and the unit is of the lateral acceleration calibration value is m/s$^2$; and both $b_{ay1}$ and $b_{ay2}$ denote calibration values of a lateral acceleration control parameter of the vehicle, and $b_{ay1}$ and $b_{ay2}$ are determined values.

14. The method as claimed in claim 8, wherein the calculation formula of the yaw rate control parameter factor by is as follow:

$$b_y = \begin{cases} b_{y1}, & y < y_1 \\ b_{y1} + \dfrac{b_{y2} - b_{y1}}{y_2 - y_1}(y - y_1), & y_1 < y < y_2 \\ b_{y2}, & y > y_2 \end{cases}$$

and y denotes a yaw rate of the vehicle, and the unit of the yaw rate is rad/s; both y1 and y2 denote yaw rate calibration values of the vehicle, y1 and y2 are determined values, and the unit of the yaw rate calibration value is rad/s; and both by1 and by2 denote calibration values of a yaw rate control parameter of the vehicle, and by1 and by2 are determined values.

15. The method as claimed in claim 8, wherein the torque control parameter factor $b_T$ under the steering acceleration condition increases along with the increase of the driving torque of the driving shaft, the calculation formula of $b_T$ is as follow:

$$b_T = \begin{cases} b_{T1}, & T < T_1 \\ b_{T1} + \dfrac{b_{T2} - b_{T1}}{T_2 - T_1}(T - T_1), & T_1 < T < T_2 \\ b_{T2}, & T > T_2 \end{cases}$$

and T denotes a driving torque of the vehicle, and the unit of the driving torque is N·m; both $T_1$ and $T_2$ denote driving torque calibration values of the vehicle, $T_1$ and $T_2$ are determined values, and the unit of the driving torque calibration value is N·m; and both $b_{T1}$ and $b_{T2}$ denote calibration values of a driving torque control parameter of the vehicle, and $b_{T1}$ and $b_{T2}$ are determined values.

**Patentansprüche**

1. Schlupfschutzsteuerungsverfahren für ein Transfergehäuse, **dadurch gekennzeichnet, dass** es Folgendes umfasst:

S10: Berechnen einer Sollgeschwindigkeit einer Hauptantriebswelle durch die folgende Formel: $V_{m, target}$ = max ($V_{s, target}$, $V_{min}$), wobei $V_{m, target}$ die Sollgeschwindigkeit der Hauptantriebswelle bezeichnet, $V_{s, target}$ die Geschwindigkeit der Hauptantriebswelle als Reaktion darauf, dass der Einfluss der Lenkung eines Fahrzeugs und der Querabweichung eines Reifens berücksichtigt wird, und $v_{min}$ eine Mindestgeschwindigkeit des Fahrzeugs bezeichnet, um einen Radgeschwindigkeitpräzisionsfehler und ein Jitterphänomen des Fahrzeugs unter einer Startniedriggeschwindigkeitfahrbedingung zu vermeiden;
S20: Bestimmen einer Schlupfschutzsteuerungsbedingung durch den folgenden Modus: als Reaktion darauf, dass es bestimmt wird, dass $V_m$ > $V_{m, target}$ (1 + $\lambda_1$) und eine Zeitdauer t des Haltens von $V_m$ > $V_{m, target}$ (1 + $\lambda_1$) größer oder gleich einer Zeitdauer $t_1$ ist, Starten einer Schlupfschutzsteuerung, und $t_1$ mit der Beschleunigung der Hauptantriebswelle in Beziehung steht, $V_m$ einen Mittelwert der Drehgeschwindigkeiten von zwei Rädern an zwei Enden der Hauptantriebswelle bezeichnet und $\lambda_1$ einen Auslöseschwellenversatz einer Schlupfschutzsteuerungsfunktion unter einer Spurschlupfbedingung bezeichnet;
in einem Schlupfschutzsteuerungsstartzustand als Reaktion darauf, dass es bestimmt wird, dass ein Eingriffssteuerungsdrehmoment $T_{target}$ des Transfergehäuses des Fahrzeugs gleich 0 ist, und die Zeitdauer t des Haltens von $T_{target}$ = 0 größer oder gleich einer Zeitdauer $t_2$ ist, Verlassen der Schlupfschutzsteuerung, und $t_2$ ein Kalibrierungswert ist;
S30: Berechnen des Eingriffssteuerungsdrehmoments $T_{target}$ des Transfergehäuses durch die folgende Formel: $T_{target} = k_p \triangle_{v, m} + k_I \int \triangle_{v, m}$ und $k_p$ und $k_I$ bezeichnen korrigierte Proportionalintegralsteuerparameter, die durch Korrigieren eines Steuerungsparameterfaktors b des Fahrzeugs in einem Über-Spurschlupfzustand und einem Unter-Spurschlupfzustand erhalten werden, $\triangle_{v, m}$ bezeichnet eine Geschwindigkeitssteuerabweichung der Hauptantriebswelle und $\triangle_{v, m} = V_m - V_{m \ target}$.

2. Verfahren nach Anspruch 1, wobei es als Reaktion darauf, dass es bestimmt wird, dass $\triangle_{v, m}$ > 0 ist, bestimmt wird, dass sich die Hauptantriebswelle im Unter-Spurschlupfzustand befindet, und das Eingriffssteuerungsdrehmoment $T_{target}$ des Transfergehäuses erhöht wird; und als Reaktion darauf, dass es bestimmt wird, dass $\triangle_{v, m}$ < 0 ist, wird es bestimmt, dass sich die Hauptantriebswelle im Über-Spurschlupfzustand befindet, und das Eingriffssteuerungsdrehmoment $T_{target}$ des Transfergehäuses verringert wird, und die Sinkgeschwindigkeit von $T_{target}$ reduziert wird.

3. Verfahren nach Anspruch 1, wobei ein Schritt S25 ferner zwischen dem Schritt S20 und dem Schritt S30 enthalten ist: Berechnen der korrigierten Proportionalintegralsteuerungsparameter $k_p$ und $k_I$ durch die folgenden Formeln:

$$k_p = \begin{cases} k_{p0}, & \Delta_{v,\,m} > 0 \\ bk_{p0}, & \Delta_{v,\,m} < 0 \end{cases}$$

$$k_I = \begin{cases} k_{I0}, & \Delta_{v,\,m} > 0 \\ bk_{I0}, & \Delta_{v,\,m} < 0 \end{cases}$$

und $k_{p0}$ und $k_{I0}$ bezeichnen Proportionalintegralsteuerungsparameter, und b bezeichnet den Steuerungsparameterfaktor.

4. Verfahren nach Anspruch 3, wobei in Schritt S25 als Reaktion darauf, dass es bestimmt wird, dass sich das Fahrzeug in einer Niedriggeschwindigkeit-Linearbeschleunigungsfahrbedingung befindet, der Steuerungsparameterfaktor b durch die folgende Formel berechnet wird: der Steuerungsparameterfaktor

$$b = \begin{cases} 1, & a_{min} - a_k \geq a_{thrsh} \\ 0, & a_{min} - a_k < a_{thrsh} \end{cases}$$

und $0 \leq b \leq 1$, $a_{min}$ bezeichnet einen Mindestgaspedalöffnungsgrad des Fahrzeugs, $a_k$ bezeichnet einen Gaspedalöffnungsgrad zum aktuellen Zeitpunkt, $a_{thrsh}$ bezeichnet einen Gas-pedalöffnungsgradänderungsschwellenwert des Fahrzeugs und $a_{thrsh}$ ist ein Kalibrierungswert.

5. Verfahren nach Anspruch 3, wobei in Schritt S25 als Reaktion darauf, dass es bestimmt wird, dass sich das Fahrzeug in einer Hochgeschwindigkeitbeschleunigungsfahrbedingung befindet, der Steuerungsparameterfaktor b durch die folgende Formel berechnet wird:
der Steuerungsparameterfaktor $b = max\,(b_\delta, b_v, b_{sw}, b_{coast})$ und $b_\delta$ bezeichnet einen Lenkraddrehwinkelsteuerungs-faktor des Fahrzeugs, $0 \leq b_\delta \leq 1$, $b_v$ bezeichnet einen Fahrzeuggeschwindigkeitsteuerungsparameterfaktor des Fahr-zeugs, $0 \leq b_v \leq 1$, $b_{sw}$ bezeichnet einen Steuerungsparameterfaktor des Fahrzeugs unter einer Lenkbedingung, $b_{coast}$ bezeichnet einen Schlupfsteuerungsparameterfaktor des Fahrzeugs, als Reaktion darauf, dass es bestimmt wird, dass sich das Fahrzeug in einer Schlupffahrbedingung befindet und eine Schlupfschutzsteuerung durchführt, der Schlupfsteuerungsparameterfaktor $b_{coast}$ ist gleich 1 und als Reaktion darauf, dass es bestimmt wird, dass sich das Fahrzeug in der Schlupffahrbedingung befindet und die Schlupfschutzsteuerung verlässt, der Schlupfsteuerungsparameterfaktor $b_{coast}$ gleich 0 ist.

6. Verfahren nach Anspruch 5, wobei die Berechnungsformel des Lenkraddrehwinkelsteuerungsfaktors $b_\delta$ des Fahr-zeugs wie folgt ist:

$$b_\delta = \begin{cases} b_{\delta 1}, & \delta < \delta_1 \\ b_{\delta 1} + \dfrac{b_{\delta 2} - b_{\delta 1}}{\delta_2 - \delta_1}(\delta - \delta_1), & \delta_1 < \delta < \delta_2 \\ b_{\delta 2}, & \delta > \delta_2 \end{cases}$$

und $\delta$ bezeichnet einen Lenkraddrehwinkel des Fahrzeugs und die Einheit des Lenkraddrehwinkels ist rad; sowohl $\delta_1$ als auch $\delta_2$ bezeichnen Kalibrierungswerte des Lenkraddrehwinkels des Fahrzeugs und $\delta_1$ und $\delta_2$ sind bestimmte Werte und die Einheit des Lenkraddrehwinkels ist rad; und sowohl $b_{\delta 1}$ als auch $b_{\delta 2}$ bezeichnen Kalibrierungswerte eines Lenkraddrehwinkelsteuerungsparameters des Fahrzeugs und $b_{\delta 1}$ und $b_{\delta 2}$ sind bestimmte Werte.

7. Verfahren nach Anspruch 5, wobei die Berechnungsformel des Fahrzeuggeschwindigkeitsteuerungsparameter-

faktors $b_v$ des Fahrzeugs wie folgt ist:

$$b_v = \begin{cases} b_{v1}, & v < v_1 \\ b_{v1} + \dfrac{b_{v2} - b_{v1}}{v_2 - v_1}(v - v_1), & v_1 < v < v_2 \\ b_{v2}, & v > v_2 \end{cases}$$

und v bezeichnet eine Fahrzeuggeschwindigkeit des Fahrzeugs und die Einheit der Fahrzeuggeschwindigkeit ist m/s; sowohl $v_1$ als auch $v_2$ bezeichnen Geschwindigkeitskalibrierungswerte des Fahrzeugs und $v_1$ und $v_2$ sind bestimmte Werte und die Einheit des Geschwindigkeitskalibrierungswerts ist m/s; und sowohl $b_{v1}$ als auch $b_{v2}$ bezeichnen Kalibrierungswerte eines Fahrzeuggeschwindigkeitsteuerungsparameters des Fahrzeugs und $b_{v1}$ und $b_{v2}$ sind bestimmte Werte.

8. Verfahren nach Anspruch 5, wobei die Berechnungsformel des Steuerungsparameterfaktors $b_{sw}$ des Fahrzeugs unter der Lenkbedingung wie folgt ist:

$$b_{sw} = max\big(b_\delta, \ b_{ay}, \ b_y\big)b_T$$

und $b_{ay}$ bezeichnet einen Querbeschleunigungssteuerungsparameterfaktor, $b_y$ bezeichnet einen Gierratensteuerungsparameterfaktor, und $b_T$ bezeichnet einen Drehmomentsteuerungsparameterfaktor unter einer Lenkbeschleunigungsbedingung.

9. Verfahren nach Anspruch 1, wobei als Reaktion darauf, dass es bestimmt wird, dass die Hauptantriebswelle eine Hinterachse ist, und der Einfluss der Lenkung des Fahrzeugs und der Querabweichung des Reifens berücksichtigt wird, die Geschwindigkeit $V_{s, \, target}$ der Hauptantriebswelle durch die folgende Formel berechnet wird:

$$v_{s, \, target} = max\left(\frac{v_{m,F} - \gamma L \sin\theta}{\cos\theta}(1 + \lambda_0), \ v_{m,F}\right)$$

und $V_{m,F}$ bezeichnet einen Mittelwert der Drehgeschwindigkeiten der zwei Räder an den zwei Enden der Vorderachse und die Einheit der Drehgeschwindigkeit ist m/s; $\lambda_0$ bezeichnet eine Sollspurschlupfrate; $\theta$ bezeichnet einen Vorderraddrehwinkel und die Einheit des Vorderraddrehwinkels ist rad; $\gamma$ bezeichnet die Gierrate des Fahrzeugs und die Einheit der Gierrate ist rad/s;
und $L$ bezeichnet einen Radstand und die Einheit des Radstands ist m;
als Reaktion darauf, dass es bestimmt wird, dass die Hauptantriebswelle eine Vorderachse ist, und der Einfluss der Lenkung des Fahrzeugs und der Querabweichung des Reifens berücksichtigt wird, wird die Geschwindigkeit $V_{s, \, target}$ der Hauptantriebswelle durch die folgende Formel berechnet:

$$v_{s, \, target} = max\Big(\big(v_{m,R}\cos\theta + \gamma L \sin\theta\big)(1 + \lambda_0), \ v_{m,R}\Big)$$

und $V_{m,R}$ bezeichnet einen Mittelwert der Drehgeschwindigkeiten der zwei Räder an den zwei Enden der Hinterachse und die Einheit der Drehgeschwindigkeiten ist m/s.

10. Verfahren nach Anspruch 1, wobei die Berechnungsformel der Mindestgeschwindigkeit Vmin des Fahrzeugs wie folgt ist:

$$v_{min} = MAP\big(v_{x0}, \ v_{y0,min}\big)$$

und sowohl $V_{x0}$ als auch $V_{y0,min}$ sind Kalibrierungswerte, $V_{x0}$ = [0 1 25 10 20 100], $V_{y0,min}$ = [21,5 1,2 10,5 0,2 0,2].

11. Elektronische Vorrichtung, umfassend:

mindestens einen Prozessor; und

einen Speicher, der dazu konfiguriert ist, mindestens ein Programm zu speichern; und

als Reaktion darauf, dass das mindestens eine Programm durch den mindestens einen Prozessor ausgeführt wird, implementiert der mindestens eine Prozessor das Schlupfschutzsteuerungsverfahren des Transfergehäuses nach einem der Ansprüche 1-10.

12. Computerlesbares Speichermedium, wobei das computerlesbare Speichermedium dazu konfiguriert ist, ein Computerprogramm zu speichern, und das Computerprogramm als Reaktion darauf, dass es durch einen Prozessor ausgeführt wird, das Schlupfschutzsteuerungsverfahren des Transfergehäuses nach einem der Ansprüche 1-10 implementiert.

13. Verfahren nach Anspruch 8, wobei die Berechnungsformel des Querbeschleunigungssteuerungsparameterfaktors bay wie folgt ist:

$$b_{ay} = \begin{cases} b_{ay1}, & ay < ay_1 \\ b_{ay1} + \dfrac{b_{ay2} - b_{ay1}}{ay_2 - ay_1}(ay - ay_1), & ay_1 < ay < ay_2 \\ b_{ay2}, & ay > ay_2 \end{cases}$$

und ay bezeichnet eine Querbeschleunigung des Fahrzeugs, und die Einheit der Querbeschleunigung ist m/s$^2$; sowohl $ay_1$ als auch $ay_2$ bezeichnen Querbeschleunigungskalibrierungswerte des Fahrzeugs, $ay_1$ und $ay_2$ sind bestimmte Werte, und die Einheit des Querbeschleunigungskalibrierungswerts ist m/s$^2$; und sowohl $b_{ay1}$ als auch $b_{ay2}$ bezeichnen Kalibrierungswerte eines Querbeschleunigungssteuerungsparameters des Fahrzeugs, und $b_{ay1}$ und $b_{ay2}$ sind bestimmte Werte.

14. Verfahren nach Anspruch 8, wobei die Berechnungsformel des Gierratensteuerungsparameterfaktors by wie folgt ist:

$$b_y = \begin{cases} b_{y1}, & y < y_1 \\ b_{y1} + \dfrac{b_{y2} - b_{y1}}{y_2 - y_1}(y - y_1), & y_1 < y < y_2 \\ b_{y2}, & y > y_2 \end{cases}$$

und y bezeichnet eine Gierrate des Fahrzeugs und die Einheit der Gierrate ist rad/s; sowohl y1 als auch y2 bezeichnen Gierratenkalibrierungswerte des Fahrzeugs, y1 und y2 sind bestimmte Werte und die Einheit des Gierratenkalibrierungswerts ist rad/s; und sowohl by1 als auch by2 bezeichnen Kalibrierungswerte eines Gierratensteuerungsparameters des Fahrzeugs und by1 und by2 sind bestimmte Werte.

15. Verfahren nach Anspruch 8, wobei der Drehmomentsteuerungsparameterfaktor $b_T$ unter der Lenkbeschleunigungsbedingung zusammen mit dem Anstieg des Antriebsdrehmoments der Antriebswelle zunimmt, wobei die Berechnungsformel von $b_T$ wie folgt ist:

$$b_T = \begin{cases} b_{T1}, & T < T_1 \\ b_{T1} + \dfrac{b_{T2} - b_{T1}}{T_2 - T_1}(T - T_1), & T_1 < T < T_2 \\ b_{T2}, & T > T_2 \end{cases}$$

und T bezeichnet ein Antriebsdrehmoment des Fahrzeugs und die Einheit des Antriebsdrehmoments ist N-m; sowohl $T_1$ als auch $T_2$ bezeichnen Antriebsdrehmomentkalibrierungswerte des Fahrzeugs, $T_1$ und $T_2$ sind bestimmte Werte und die Einheit des Antriebsdrehmomentkalibrierungswerts ist N-m; und sowohl $b_{T1}$ als auch $b_{T2}$ bezeichnen Kalibrierungswerte eines Antriebsdrehmomentsteuerungsparameters des Fahrzeugs und $b_{T1}$ und $b_{T2}$ sind bestimmte Werte.

**Revendications**

1. Procédé de commande antidérapage d'une boîte de transfert, **caractérisé en ce qu'**il comprend :

   S10 : calculer une vitesse cible d'un arbre de transmission principal par la formule suivante : $V_{m, target}$= max ($V_{s, target}$, $V_{min}$), où $V_{m, target}$ désigne la vitesse cible de l'arbre de transmission principal, $V_{s, target}$ désigne la vitesse de l'arbre de transmission principal en réponse à la considération de l'influence de la direction d'un véhicule et de la déviation latérale d'un pneu, et $v_{min}$ désigne une vitesse minimale du véhicule pour éviter une erreur de précision de la vitesse des roues et un phénomène de vibration du véhicule dans une condition de conduite à basse vitesse de départ ;

   S20 : déterminer une condition de commande antidérapage par le mode suivant : en réponse à la détermination que $V_m > V_{m, target} (1 + \lambda_1)$, et une période de temps t de maintien de $V_m > V_{m, target} (1 + \lambda_1)$ est supérieure ou égale à une période de temps $t_1$, démarrer une commande antidérapage, et $t_1$ est lié à l'accélération de l'arbre de transmission principal, $V_m$ désigne une valeur moyenne des vitesses de rotation de deux roues à deux extrémités de l'arbre de transmission principal, et $\lambda_1$ désigne un décalage de seuil de déclenchement d'une fonction de commande antidérapage dans une condition de dérapage ;

   dans une condition de démarrage de la commande antidérapage, en réponse à la détermination qu'un couple de commande d'engagement $T_{target}$ de la boîte de transfert du véhicule est égal à 0, et que la période de temps t de maintien de $T_{target} = 0$ est supérieure ou égale à une période de temps $t_2$, sortir de la commande antidérapage, et $t_2$ est une valeur d'étalonnage ;

   S30 : calculer le couple de commande d'engagement $T_{target}$ de la boîte de transfert par la formule suivante : $T_{target} = k_p \triangle_{v, m} + k_I \int \Delta_{v, m}$, et $k_p$ et $k_I$ désignent des paramètres de commande intégrale proportionnelle corrigés obtenus en corrigeant un facteur de paramètre de commande b du véhicule dans une condition de surdérapage et une condition de sous-dérapage, $\triangle_{v, m}$ désigne un écart de commande de vitesse de l'arbre de transmission principal, et $\triangle_{v, m} = V_m - V_{m, target}$.

2. Procédé selon la revendication 1, dans lequel en réponse à la détermination que $\triangle_{v, mv} > 0$, l'arbre de transmission principal est déterminé pour être dans la condition de sous-dérapage, et le couple de commande d'engagement $T_{target}$ de la boîte de transfert est augmenté ; et en réponse à la détermination que $\triangle_{v, mv} < 0$, l'arbre de transmission principal est déterminé pour être dans l'état de surdérapage, et le couple de commande d'engagement $T_{target}$ de la boîte de transfert est diminué, et la vitesse de descente de $T_{target}$ est réduite.

3. Procédé selon la revendication 1, une étape S25 étant en outre contenue entre l'étape S20 et l'étape S30 : calculer les paramètres de commande intégrale proportionnelle corrigés $k_p$ et $k_I$ par les formules suivantes :

$$k_p = \begin{cases} k_{p0}, & \Delta_{v, m} > 0 \\ bk_{p0}, & \Delta_{v, m} < 0 \end{cases}$$

$$k_I = \begin{cases} k_{I0}, & \Delta_{v, m} > 0 \\ bk_{I0}, & \Delta_{v, m} < 0 \end{cases}$$

   et $k_{p0}$ et $k_{I0}$ désignent des paramètres de commande intégrale proportionnelle, et b désigne le facteur de paramètre de commande.

4. Procédé selon la revendication 3, dans lequel à l'étape S25, en réponse à la détermination que le véhicule est dans une condition de conduite d'accélération linéaire à basse vitesse, le facteur de paramètre de commande b est calculé par la formule suivante :

$$b = \begin{cases} 1, & a_{min} - a_k \geq a_{thrsh} \\ 0, & a_{min} - a_k < a_{thrsh} \end{cases}$$

le facteur de paramètre de commande et $0 \leq b \leq 1$, $a_{min}$ désigne un degré d'ouverture minimum de l'accélérateur du véhicule, $a_k$ désigne un degré d'ouverture de l'accélérateur à l'instant actuel, $a_{thrsh}$ désigne une valeur seuil de modification du degré d'ouverture de l'accélérateur du véhicule, et $a_{thrsh}$ est une valeur d'étalonnage.

**5.** Procédé selon la revendication 3, dans lequel à l'étape S25, en réponse à la détermination que le véhicule est dans une condition de conduite d'accélération à grande vitesse, le facteur de paramètre de commande b est calculé par la formule suivante :

le facteur de paramètre de commande $b = max (b_\delta, b_v, b_{sw}, b_{coast})$ et $b_\delta$ désigne un facteur de commande de l'angle de rotation du volant de direction du véhicule, $0 \leq b_\delta \leq 1$, $b_v$ désigne un facteur de paramètre de commande de la vitesse du véhicule, $0 \leq b_v \leq 1$, $b_{sw}$ désigne un facteur de paramètre de commande du véhicule dans une condition de direction, $b_{coast}$ désigne un facteur de paramètre de commande de dérapage du véhicule, en réponse à la détermination que le véhicule est dans une condition de conduite de dérapage et effectue une commande antidérapage, le facteur de paramètre de commande de dérapage $b_{coast}$ est égal à 1, et en réponse à la détermination que le véhicule est dans la condition de conduite de dérapage et quitte la commande antidérapage, le facteur de paramètre de commande de dérapage $b_{coast}$ est égal à 0.

**6.** Procédé selon la revendication 5, la formule de calcul du facteur de commande de l'angle de rotation du volant de direction $b_\delta$ du véhicule étant la suivante :

$$b_\delta = \begin{cases} b_{\delta 1}, & \delta < \delta_1 \\ b_{\delta 1} + \dfrac{b_{\delta 2} - b_{\delta 1}}{\delta_2 - \delta_1}(\delta - \delta_1), & \delta_1 < \delta < \delta_2 \\ b_{\delta 2}, & \delta > \delta_2 \end{cases}$$

et $\delta$ désigne un angle de rotation du volant de direction du véhicule, et l'unité de l'angle de rotation du volant de direction est le rad ; $\delta_1$ et $\delta_2$ désignent des valeurs d'étalonnage de l'angle de rotation du volant de direction du véhicule, et $\delta_1$ et $\delta_2$ sont des valeurs déterminées, et l'unité de l'angle de rotation du volant de direction est le rad ; et $b_{\delta 1}$ et $b_{\delta 2}$ désignent des valeurs d'étalonnage d'un paramètre de commande de l'angle de rotation du volant de direction du véhicule, et $b_{\delta 1}$ et $b_{\delta 2}$ sont des valeurs déterminées.

**7.** Procédé selon la revendication 5, la formule de calcul du facteur de paramètre de commande de la vitesse $b_v$ du véhicule étant la suivante :

$$b_v = \begin{cases} b_{v1}, & v < v_1 \\ b_{v1} + \dfrac{b_{v2} - b_{v1}}{v_2 - v_1}(v - v_1), & v_1 < v < v_2 \\ b_{v2}, & v > v_2 \end{cases}$$

et v désigne une vitesse de véhicule du véhicule, et l'unité de la vitesse du véhicule est le m/s ; $v_1$ et $v_2$ désignent les valeurs d'étalonnage de la vitesse du véhicule, et $v_1$ et $v_2$ sont des valeurs déterminées, et l'unité de la valeur d'étalonnage de la vitesse est le m/s ; et $b_{v1}$ et $b_{v2}$ désignent les valeurs d'étalonnage d'un paramètre de commande de la vitesse du véhicule, et $b_{v1}$ et $b_{v2}$ sont des valeurs déterminées.

**8.** Procédé selon la revendication 5, la formule de calcul du facteur de paramètre de commande $b_{sw}$ du véhicule dans les conditions de direction étant la suivante :

$$b_{sw} = max(b_\delta, \ b_{ay}, \ b_y)b_T$$

et $b_{ay}$ désigne un facteur de paramètre de commande de l'accélération latérale, $b_y$ désigne un facteur de paramètre de commande de l'amplitude du mouvement de lacet, et $b_T$ désigne un facteur de paramètre de commande du couple dans une condition d'accélération de la direction.

**9.** Procédé selon la revendication 1, dans lequel en réponse à la détermination que l'arbre de transmission principal est un essieu arrière, et à la considération de l'influence de la direction du véhicule et de la déviation latérale du pneu, la vitesse $V_{s, \, target}$ de l'arbre de transmission principal est calculée par la formule suivante :

$$v_{s,\ target} = max\left(\frac{v_{m,F} - \gamma L \sin\theta}{\cos\theta}(1+\lambda_0),\ v_{m,F}\right)$$

et $V_{m,F}$ désigne une valeur moyenne des vitesses de rotation des deux roues aux deux extrémités de l'essieu avant, et l'unité de la vitesse de rotation est le m/s ; $\lambda_0$ désigne un taux de dérapage cible ; $\theta$ désigne un angle de rotation de la roue avant, et l'unité de l'angle de rotation de la roue avant est le rad ; y désigne l'amplitude du mouvement de lacet du véhicule, et l'unité de l'amplitude du mouvement de lacet est le rad/s ; et *L* désigne un empattement, et l'unité de l'empattement est m ;

en réponse à la détermination que l'arbre de transmission principal est un essieu avant, et à la considération de l'influence de la direction du véhicule et de la déviation latérale du pneu, la vitesse $V_{s,\ target}$ de l'arbre de transmission principal est calculée par la formule suivante :

$$v_{s,\ target} = max\left(\left(v_{m,R}\cos\theta + \gamma L \sin\theta\right)(1+\lambda_0),\ v_{m,R}\right)$$

et $V_{m,R}$ désigne une valeur moyenne des vitesses de rotation des deux roues aux deux extrémités de l'essieu arrière, et l'unité des vitesses de rotation est le m/s.

10. Procédé selon la revendication 1, la formule de calcul de la vitesse minimale $v_{min}$ du véhicule étant la suivante :

$$v_{min} = MAP\left(v_{x0},\ v_{y0,min}\right)$$

et $V_{x0}$ et $V_{y0,min}$ étant des valeurs d'étalonnage, $V_{x0}$ = [0 1 25 10 20 100], $V_{y0,min}$ = [21.5 1.2 10.5 0.2 0.2].

11. Dispositif électronique, comprenant :

au moins un processeur ; et
une mémoire, configurée pour stocker au moins un programme ; et
en réponse à l'exécution d'au moins un programme par l'au moins un processeur, l'au moins un processeur met en œuvre le procédé de commande antidérapage de la boîte de transfert selon l'une quelconque des revendications 1-10.

12. Support de stockage lisible par ordinateur, le support de stockage lisible par ordinateur étant configuré pour stocker un programme informatique, et en réponse à l'exécution par un processeur, le programme informatique met en œuvre le procédé de commande antidérapage de la boîte de transfert selon l'une quelconque des revendications 1-10.

13. Procédé selon la revendication 8, la formule de calcul du facteur de paramètre de commande de l'accélération latérale bay étant la suivante :

$$b_{ay} = \begin{cases} b_{ay1}, & ay < ay_1 \\ b_{ay1} + \dfrac{b_{ay2} - b_{ay1}}{ay_2 - ay_1}(ay - ay_1), & ay_1 < ay < ay_2 \\ b_{ay2}, & ay > ay_2 \end{cases}$$

et $a_y$ désigne une accélération latérale du véhicule, et l'unité de l'accélération latérale est m/s$^2$ ; $ay_1$ et $ay_2$ désignent des valeurs d'étalonnage de l'accélération latérale du véhicule, $ay_1$ et $ay_2$ sont des valeurs déterminées, et l'unité de la valeur d'étalonnage de l'accélération latérale est m/s$^2$ ; et $b_{ay1}$ et $b_{ay2}$ désignent des valeurs d'étalonnage d'un paramètre de commande de l'accélération latérale du véhicule, et $b_{ay1}$ et $b_{ay2}$ sont des valeurs déterminées.

14. Procédé selon la revendication 8, la formule de calcul du facteur de paramètre de commande de l'amplitude du mouvement de lacet $b_y$ étant la suivante :

$$b_y = \begin{cases} b_{y1}, & y < y_1 \\ b_{y1} + \dfrac{b_{y2} - b_{y1}}{y_2 - y_1}(y - y_1), & y_1 < y < y_2 \\ b_{y2}, & y > y_2 \end{cases}$$

et y désigne une amplitude du mouvement de lacet du véhicule, et l'unité de l'amplitude du mouvement de lacet est le rad/s ; y1 et y2 désignent des valeurs d'étalonnage de l'amplitude du mouvement de lacet du véhicule, y1 et y2 sont des valeurs déterminées, et l'unité de la valeur d'étalonnage de l'amplitude du mouvement de lacet est le rad/s ; et by1 et by2 désignent des valeurs d'étalonnage d'un paramètre de commande de l'amplitude du mouvement de lacet du véhicule, et by1 et by2 sont des valeurs déterminées.

15. Procédé selon la revendication 8, le facteur du paramètre de commande du couple $b_T$ dans la condition d'accélération de la direction augmente avec l'augmentation du couple moteur de l'arbre de transmission, la formule de calcul de $b_T$ étant la suivante :

$$b_T = \begin{cases} b_{T1}, & T < T_1 \\ b_{T1} + \dfrac{b_{T2} - b_{T1}}{T_2 - T_1}(T - T_1), & T_1 < T < T_2 \\ b_{T2}, & T > T_2 \end{cases}$$

et T désigne un couple moteur du véhicule, et l'unité du couple moteur est N-m ; $T_1$ et $T_2$ désignent les valeurs d'étalonnage du couple moteur du véhicule, $T_1$ et $T_2$ sont des valeurs déterminées, et l'unité de la valeur d'étalonnage du couple moteur est N-m ; et $b_{T1}$ et $b_{T2}$ désignent les valeurs d'étalonnage d'un paramètre de commande du couple moteur du véhicule, et $b_{T1}$ et $b_{T2}$ sont des valeurs déterminées.

```
┌─────────────────────────────────────┐
│   Calculate a target speed of a main │
│            driving shaft             │
└─────────────────────────────────────┘
                   │
                   ▼
┌─────────────────────────────────────┐
│  Determine an anti-slip control condition │
└─────────────────────────────────────┘
                   │
                   ▼
┌─────────────────────────────────────┐
│     Calculate corrected proportional │
│  integral control parameters $k_p$ and $k_l$ │
└─────────────────────────────────────┘
                   │
                   ▼
┌─────────────────────────────────────┐
│    Calculate an engagement control   │
│  torque $T_{target}$ of a transfer case │
└─────────────────────────────────────┘
```

Fig.1

A front axle is the main driving shaft

Calculate $v_{s,\,target}$ according $v_{s,\,target} = max\left(\dfrac{v_{m,F} - \gamma L \sin\theta}{\cos\theta}(1+\lambda_0),\ v_{m,F}\right)$

Calculate $v_{min}$ according t $v_{min} = MAP(v_{x0},\ v_{y0,min})$

Calculate $t_1$ according $t_1 = \begin{cases} t_{11}, & a_{axle} < a_{11} \\ t_{11} + \dfrac{t_{12} - t_{11}}{a_{12} - a_{11}}(a_{axle} - a_{11}), & a_{11} < a_{axle} < a_{12} \\ t_{12}, & a_{axle} > a_{12} \end{cases}$

Judge the relationship between $v_m$ and $v_{m,\,target}(1+\lambda_1)$, and judge the relationship between $t$ and $t_1$

In response to $v_m > v_{m,\,target}(1+\lambda_1)$, and the time $t$ of keeping $v_m > v_{m,\,target}(1+\lambda_1)$ is greater than or equal to $t_1$, start anti-slip control

Judge to increase or decrease an engagement control torque $T_{target}$ of a transfer case according to $\triangle_{v,m} > 0$ or $\triangle_{v,m} < 0$

Calculate a control parameter factor b according to $b = \begin{cases} 1, & a_{min} - a_k \geq a_{thrsh} \\ 0, & a_{min} - a_k < a_{thrsh} \end{cases}$ or $b = max(b_\delta,\ b_v,\ b_{sw},\ b_{coast})$

Respectively calculate corrected proportional integral control parameters $k_p$ and $k_I$ according to $k_p = \begin{cases} k_{p0}, & \triangle_{v,m} > 0 \\ bk_{p0}, & \triangle_{v,m} < 0 \end{cases}$ or $k_I = \begin{cases} k_{I0}, & \triangle_{v,m} > 0 \\ bk_{I0}, & \triangle_{v,m} < 0 \end{cases}$

Calculate $T_{target}$ according to $T_{target} = k_p\triangle_{v,m} + k_I\int\triangle_{v,m}$

In an anti-slip control starting state, in response to the engagement control torque $T_{target}$ of the transfer case of the vehicle being equal to 0, and the time t of keeping $T_{target} = 0$ is greater than or equal to $t_2$, exit the anti-slip control

Fig.2

600

601

Processing apparatus

602

ROM

603

RAM

604

605

I/O interface

606

Input apparatus

607

Output apparatus

608

Storage apparatus

609

Communicatio n apparatus

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110378352

- EP 2022659 A1